# EUROPÄISCHE PATENTANMELDUNG

(11) **EP 3 364 525 A1**
(43) Veröffentlichungstag der Anmeldung: **22.08.2018**
(21) Anmeldenummer: 17157089.8
(22) Anmeldetag: 21.02.2017
(51) Int. Cl.: H02K 5/02, H02K 5/173, H02K 15/00, H02K 15/02, H02K 15/14

(54) **FERTIGUNG FUNKTIONELLER EINHEITEN ELEKTRISCHER MASCHINEN DURCH GENERATIVE FERTIGUNGSVERFAHREN**

(71) Anmelder: Siemens Aktiengesellschaft, 80333 München (DE)
(72) Erfinder: Hösle, Markus, 91058 Erlangen (DE)

(57) **Zusammenfassung**

Die Herstellung einer elektrischen Maschine soll vereinfacht werden. Dazu ist eine elektrische Maschine vorgesehen mit mindestens zwei Komponenten aus der Gruppe von Gehäuse, Gehäuseanbauteil, Kühlmantelteil, Lagerteil (17,18), magnetisch leitfähiger Grundkörper, elektrischer Leiter, Isolation, Welle (12), Lüfter und elektrische Anschlussvorrichtung. Die mindestens zwei Komponenten sind einteilig mittels eines generativen Fertigungsverfahrens hergestellt.

## Beschreibung

Die vorliegende Erfindung betrifft eine elektrische Maschine mit mindestens zwei Komponenten aus der Gruppe von Gehäuse, Gehäuseanbauteil, Kühlmantelteil, Lagerteil, Lagerschild, magnetisch leitfähiger Grundkörper, elektrischer Leiter, Isolation, Welle, Lüfter und elektrische Anschlussvorrichtung. Darüber hinaus betrifft die vorliegende Erfindung ein Verfahren zum Herstellen einer entsprechenden elektrischen Maschine, in dem die jeweiligen Komponenten gefertigt werden.

Elektrische Maschinen und insbesondere dynamoelektrische Maschinen werden aus einzelnen Komponenten wie Lager, Lagerschilde, Gehäuse, Kühlmäntel, Anbauteile, Blechpakete, Wicklungen, Isolationen, Lüfterflügel etc. zusammengesetzt. Elektrische Motoren weisen dabei insbesondere diejenigen dieser Komponenten auf, die den Stator und den Rotor bzw. das Passivteil und das Aktivteil ausmachen. Demgegenüber weisen insbesondere Transformatoren als elektrische Maschinen nur diejenigen der genannten Komponenten auf, die nicht bewegt sind. Ausnahmen hiervon können beispielsweise Transformatoren mit aktiver Lüftung sein.

Konventionell werden zum Verbinden der einzelnen Komponenten der elektrischen Maschinen folgende Fügetechniken eingesetzt: Schraubverbindungen, Klebeverbindungen, Presssitze und dergleichen. Nachteilig dabei ist, dass die einzelnen Komponenten auf Maß gefertigt sein müssen, um dementsprechende Funktionalitäten der elektrischen Maschine zu gewährleisten. Derart spezifische Verbindungen wären beispielsweise der Blechsitz des Rotorblechpakets auf der Welle, das Gehäuse am Statorblechpaket, der dichte Verschluss eines Flüssigkeitskühlmantels und dergleichen.

Bislang wurden die oben genannten Komponenten der elektrischen Maschinen in der Regel einzeln gefertigt. Aufgrund der notwendigen Komposition dieser Einzelteile werden bei deren Fertigung gewisse Toleranzen zugelassen. Diese Toleranzen haben zwar unter Umständen einen geringen negativen Einfluss auf die Funktionalität der elektrischen Maschine, aber sie haben den Vorteil, dass die elektrische Maschine dadurch nicht unnötig verteuert wird.

Bei der Fertigung von sehr kleinen Bauteilen, für Unikate bei Schmuck oder in der Medizin- und Dentaltechnik sowie bei der Kleinserienfertigung oder Einzelfertigung von Teilen mit einer hohen geometrischen Komplexität, sind gelegentlich generative Verfahren im Einsatz. Derartige generative Fertigungsverfahren sind auch als additive Fertigung bzw. als Rapid Prototyping bekannt. Die Fertigung meist von Modellen, Mustern und Prototypen erfolgt in der Regel direkt auf der Basis rechnerinterner Datenmodelle aus formlosen (Flüssigkeiten, Pulver und Ähnlichem) oder formneutralen (Band, drahtförmigem) Material mittels chemischer und/oder physikalischer Prozesse.

Die Aufgabe der vorliegenden Erfindung besteht darin, die Herstellung elektrischer Maschinen zu vereinfachen.

Erfindungsgemäß wird diese Aufgabe durch eine elektrische Maschine sowie ein entsprechendes Herstellungsverfahren gemäß den unabhängigen Ansprüchen gelöst. Vorteilhafte Weiterbildungen der Erfindung ergeben sich aus den Unteransprüchen.

Erfindungsgemäß ist demnach eine elektrische Maschine mit mindestens zwei Komponenten aus der Gruppe von Gehäuse, Gehäuseanbauteil, Kühlmantelteil, Lagerteil, Lagerschild, magnetisch leitfähiger Grundkörper, elektrischer Leiter, Isolation, Welle, Lüfter und elektrische Anschlussvorrichtung vorgesehen. Die genannten Komponenten sind Hauptkomponenten von elektrischen Maschinen. Unter einem Gehäuseanbauteil ist hier eine Komponente zu verstehen, die üblicherweise mit einem Verbindungsmittel an das Gehäuse angebaut wird. Das Verbindungsmittel selbst ist darunter nicht zu verstehen. Ein Kühlmantelteil bedeutet ein gesamter Kühlmantel oder ein Teil eines Kühlmantels. Beispielweise ist ein Kühlmantel in einen Außenkühlmantel und in einen Innenkühlmantel geteilt. Ein Lagerteil wiederum kann ein gesamtes Lager oder ein Teil eines Lagers bedeuten. Ein Teil eines Lagers wäre beispielsweise der Innenring oder der Außenring sowie etwaige Wälzkörper. Unter einem magnetisch leitfähigen Grundkörper ist beispielsweise ein Blechpaket zu verstehen. Darüber hinaus kann es sich aber auch um einen anderen magnetisch leitfähigen Körper wie etwa ein gesintertes Teil handeln. Ein solcher magnetisch leitfähiger Grundkörper dient häufig als Träger von Wicklungen bzw. zur Leitung des magnetischen Flusses. Ein elektrischer Leiter kann im vorliegenden Fall Teil einer elektrischen Wicklung oder deren Zuleitung sein. Insbesondere kann es sich auch um Leiterstäbe, Kurschlussringe, Leiter von Wicklungen, Wickelköpfen und dergleichen handeln. Unter der Isolation ist nicht nur eine elektrische Isolation, sondern auch gegebenenfalls eine magnetische Isolation zu verstehen. Eine elektrische Anschlussvorrichtung bedeutet beispielsweise ein Anschlusskasten oder einfach Klemmen zum Anschluss der elektrischen Maschine an eine Versorgung. Die übrigen genannten Komponenten sind selbsterklärend.

In vorteilhafter Weise sind nun mindestens zwei dieser Komponenten der elektrischen Maschine einteilig mittels eines oder mehrerer generativer Fertigungsverfahrens gefertigt. Dies bedeutet, dass mindestens zwei dieser Komponenten einstückig hergestellt sind und damit ein gemeinsames Teil bilden, welches nur unter Zerstörung geteilt werden kann. Dieses einteilige Bilden setzt nicht voraus, dass beide Komponenten aus dem gleichen Material bestehen. Vielmehr können beide Komponenten aus unterschiedlichen Materialien bzw. Materialgemischen generativ aufgebaut werden und z.B. letztlich ineinander gefügt sein. Es können natürlich auch drei oder mehr der genannten Komponenten einteilig aneinander gebildet sein. Schließlich kann die gesamte elektrische Maschine durch ein einziges generatives Fertigungsverfahren hergestellt werden. Je mehr Komponenten durch das Fertigungsverfahren bereits aneinander gefügt sind, desto geringer ist später der Aufwand für das Zusammenfügen der elektrischen Maschine. Durch das einteilige generative Herstellen mehrerer Komponenten kann also der Montageaufwand, aber auch der Logistikaufwand reduziert werden.

Bei einer speziellen Ausgestaltung der elektrischen Maschine kann es sich um eine dynamoelektrische Maschine handeln. Es kann sich also beispielsweise um einen Generator oder Motor handeln. Der Motor kann als rotatorischer Antrieb oder als Linearantrieb ausgebildet sei. Speziell kann das generative Fertigungsverfahren für Klein- und Kleinstmaschinen Verwendung finden, deren Leistung unter 1 W liegt. In diesem Leistungsbereich sind die Kräfte so gering und die Teile so klein, dass generative Herstellungsverfahren gerade im Hinblick auf die Lebensdauer akzeptabel und im Hinblick auf den Montageaufwand von Vorteil sind.

Die mindestens zwei Komponenten können aus mehreren Materialien gefertigt sein, wie dies oben bereits angedeutet wurde. Dies bedeutet, dass sowohl Komponenten, die einen mechanischen Hauptzweck haben, wie beispielsweise Gehäuse, Lagerschild, Lagerteil, Welle und dergleichen, als auch Komponenten die einen elektrischen oder magnetischen Hauptzweck besitzen, wie der magnetisch leitfähige Grundkörper oder der elektrische Leiter, in dem einzigen generativen Fertigungsverfahren hergestellt werden können.

In einer Weiterbildung der elektrischen Maschine können die mindestens zwei Komponenten hauptsächlich aufeinander abgestützt sein. Dies bedeutet, dass die Kraftübertragung zwischen den beiden Komponenten hauptsächlich direkt von der einen zur anderen Komponente oder umgekehrt erfolgt und nicht etwa hauptsächlich über eine dritte Komponente. So stützt sich beispielsweise ein Lagerschild hauptsächlich am Gehäuse ab. Daher ist es günstig, wenn diese mechanische Gruppe von Gehäuse und Lagerschild einteilig durch das generative Fertigungsverfahren hergestellt wird. Ähnliches gilt für die funktionelle Einheit von Außenlagerring und Lagerschild, die sich auch gegenseitig stützen und somit eine mechanische Funktionsgruppe bilden. Ein weiteres Beispiel wäre der Lagerinnenring, die Welle und/oder der Lüfter. Auch hier erfolgt die Hauptabstützung in der Regel über die jeweilige Nachbarkomponente.

In einer speziellen Ausgestaltung können die Komponenten eine elektrisch und magnetisch passive, einteilige Einheit bilden. Eine derartige elektrisch und magnetisch passive Einheit wäre beispielsweise eine mechanische Funktionsgruppe wie etwa das Gehäuse und das Lagerschild, das Gehäuse und ein Kühlmantelteil, die Welle und der Lüfter und so weiter. Diese elektrisch und magnetisch passiven, einteiligen Einheiten könnten aus einem einheitlichen Material, z.B. einem Metall oder einem Isolator hergestellt werden.

Zusätzlich könnte beispielsweise an der einteiligen Einheit von Gehäuse und Lagerschild noch einteilig das Kühlmantelteil und/oder das Lagerteil und/oder das Gehäuseanbauteil angeformt sein. Auch eine solche drei- oder mehrkomponentige Einheit kann aus einem einzigen Material gefertigt sein. Andererseits kann das Material aber auch wieder komponentenspezifisch gewählt werden.

Des Weiteren können andere der Komponenten eine elektrisch und magnetisch aktive, einteilige Einheit bilden. So wäre beispielsweise der elektrische Leiter zusammen mit dem magnetisch leitfähigen Grundkörper eine solche elektrisch und magnetisch aktive Einheit. Eine solche elektrisch und magnetisch aktive, einteilige Einheit kann die Hauptkomponente eines Stators oder Rotors einer rotatorischen dynamoelektrischen Maschine, oder der Hauptteil eines Linearantriebs, oder aber auch der Hauptteil eines Transformators sein. Derartige aktive Komponenten lassen sich gegebenenfalls wieder aus wenigen verschiedenen Materialien herstellen.

In einer vorteilhaften Ausgestaltung weist die einteilige Einheit einen Stator oder Rotor auf. Damit wird eine gesamte Haupt-Funktionseinheit einer dynamoelektrischen Maschine einteilig hergestellt. Dies erleichtert den Montageaufwand deutlich.

Weiterhin kann vorgesehen sein, dass die einteilige Einheit den Stator und mindestens eine Komponente aus der Gruppe von Gehäuse, Gehäuseanbauteil, Kühlmantelteil, Lagerteil, Lagerschild und elektrische Anschlussvorrichtung aufweist. Dies hat den Vorteil, dass der Stator als aktives Teil und ein weiteres passives Teil miteinander einstückig gebildet werden können, um beispielsweise die mechanische Abstützung des Stators zu erreichen. Andererseits kann mit einer solchen Einheit beispielsweise auch die Kühlung des Stators ganz oder teilweise gewährleistet sein. Speziell können zusammen mit dem Stator sämtliche unbeweglichen Komponenten zu einer Einheit zusammengefügt sein.

Daneben kann aber auch vorgesehen sein, dass der Rotor eine einteilige Einheit bildet, die nicht nur aus den elektrisch bzw. magnetisch aktiven Komponenten wie magnetisch leitfähiger Grundkörper und elektrischer Leiter bzw. Blechpaket und Wicklung besteht, sondern zudem auch die Welle und/oder den Lüfter aufweist. Damit könnte eine komplette rotierende Einheit in einem Stück zur Verfügung gestellt werden.

Die oben genannte Aufgabe wird erfindungsgemäß auch gelöst durch ein Verfahren zum Herstellen einer elektrischen Maschine durch
- Fertigen von mindestens zwei Komponenten aus der Gruppe von Gehäuse, Gehäuseanbauteil, Kühlmantelteil, Lagerteil, Lagerschild, magnetisch leitfähiger Grundkörper, elektrischer Leiter, Isolation, Welle, Lüfter und elektrische Anschlussvorrichtung für die elektrische Maschine, wobei
- die mindestens zwei Komponenten einteilig mittels eines oder mehrerer generativer Fertigungsverfahren gefertigt werden.

Die oben im Zusammenhang mit der erfindungsgemäßen elektrischen Maschine genannten Vorteile und Variationsmöglichkeiten gelten sinngemäß für das erfindungsgemäße Verfahren. Etwaige dort genannte funktionelle Merkmale können als entsprechende Verfahrensmerkmale für das soeben erwähnte Verfahren betrachtet werden.

Ein besonderes Ausführungsbeispiel zeichnet sich dadurch aus, dass die gesamte elektrische Maschine mit sämtlichen Komponenten der Gruppe mittels des oder der mehreren generativen Herstellungsverfahren in einem einzigen Prozess hergestellt wird. Es wird also die elektrische Maschine gegebenenfalls einschließlich eines Lagers und auch einschließlich Rotor und Stator, "einteilig" bzw. in einem einzigen Prozess generativ hergestellt. Dabei wird hier ein Rotor und ein Stator als einstückig bzw. einteilig betrachtet, wenn sie zusammen in einem einzigen Prozess generativ hergestellt werden und nicht ohne Zerstörung auseinander genommen werden können. Ähnliches gilt für ein Lager mit einem Innenring und einem Außenring.

Bei einer speziellen Ausgestaltung des erfindungsgemäßen Verfahrens ist vorgesehen, dass das generative Fertigungsverfahren ein Pulverbettverfahren wie selektives Lasersintern oder selektives Laserschmelzen, ein Freiraumverfahren wie Auftragsschweißen oder Metall-Pulver-Auftragsverfahren, ein Flüssigmaterialverfahren wie Stereolithographie oder ein anderes Schichtbauverfahren wie 3D-Siebdruck umfasst. Hiermit können die gängigsten generativen Fertigungsverfahren für die Herstellung der elektrischen Maschine eingesetzt werden.

Die vorliegende Erfindung wird nun anhand der beigefügten Zeichnungen näher erläutert, in denen zeigen:
- FIG 1: einen Längsschnitt durch eine dynamoelektrische Maschine mit mehreren Kühlvarianten;
- FIG 2: einen Querschnitt durch eine einteilige Gehäuse-Lagerschild-Einheit;
- FIG 3: einen Querschnitt durch Abschnitte des Lagerschilds, des Lagers und der Welle einer elektrischen Maschine und
- FIG 4: einen Querschnitt durch einen Teil eines Kühlmantels und eines Umrichters für eine elektrische Maschine.

Die nachfolgend näher geschilderten Ausführungsbeispiele stellen bevorzugte Ausführungsformen der vorliegenden Erfindung dar. Dabei ist zu beachten, dass die einzelnen Komponenten nicht nur in den geschilderten Merkmalskombinationen, sondern auch in Alleinstellung oder in anderen technisch sinnvollen Merkmalskombinationen realisiert werden können.

Auch wenn die nachfolgenden Beispiele sich auf dynamoelektrische Maschinen wie etwa Motoren und Generatoren beziehen, können ähnliche Beispiele des einteiligen generativen Fertigens von Hauptkomponenten auch für andere elektrische Maschinen wie Transformatoren durch unmittelbaren Transfer gefunden werden.

Konkret werden nunmehr zwei oder mehrere Komponenten der elektrischen Maschine mit einem oder mehreren, dementsprechend geeigneten generativen Herstellungsverfahren (z.B. selektives Lasersintern (SLS) und/oder selektives Laserschmelzen (SLM)) gefertigt, um so einstückige Teile, insbesondere funktionelle Einheiten aus einem oder mehreren unterschiedlichen Materialien zu erhalten. Je nach Aufwand im Vergleich zu herkömmlichen (spanabhebenden, biegenden, gießenden etc.) Herstellungsverfahren können so zwei oder mehrere Komponenten zusammen gefertigt werden. Die Anzahl der Einzelteile und damit die Montage wird somit wesentlich vereinfacht. Im Folgenden werden beispielhaft einige funktionelle Einheiten mit mehreren einteilig zusammengefügten Komponenten mit den sich daraus ergebenden Vorteilen vorgestellt.

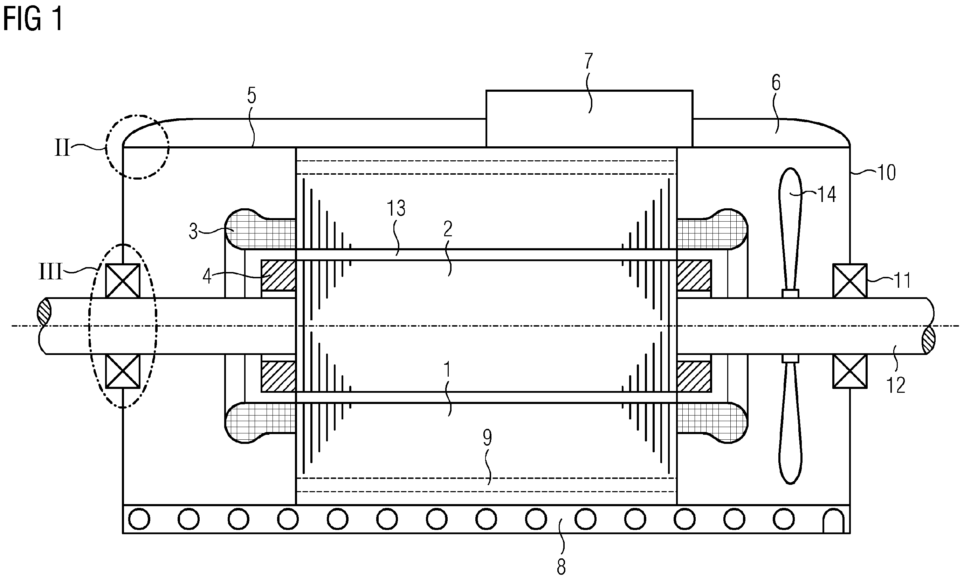

Zunächst sei anhand von FIG 1 der Aufbau einer dynamoelektrischen Maschine erläutert. Es handelt sich hierbei um einen prinzipiellen Längsschnitt durch eine exemplarische innengekühlte Asynchronmaschine. Die elektrische Maschine besitzt hier einen Stator 1 und einen Rotor 2. Der Stator 1 weist ein Wicklungssystem 3 auf, dessen Wickelköpfe aus dem Blechpaket ragen. Der Rotor 2 besitzt hier elektrische Leiter, die in sein Blechpaket eingebracht sind und stirnseitig mittels Kurzschlussringen 4 miteinander verbunden sind. Wie bereits erwähnt, ist diese Art von Rotor 2 und Stator 1 exemplarisch für alle anderen Arten von Rotor und Stator zu sehen.

Der Stator 1 ist in ein Gehäuse 5 montiert bzw. dort untergebracht. Im oberen Teil von FIG 1 besitzt das Gehäuse 5 Außenrippen 6 zur Kühlung. Diese sind Teil eines Kühlmantels, welcher einteilig mit dem Gehäuse 5 geformt sein kann. Darüber hinaus ist an dem Außenumfang des Gehäuses 5 ein optionales Gehäuseanbauteil 7 angeordnet. Dieses Gehäuseanbauteil 7 kann als Klemmenkasten realisiert sein und/oder einen Umrichter beinhalten.

Auf der Unterseite von FIG 1 ist das Gehäuse 5 als Alternative mit einem Flüssigkeitskühlmantel 8 ausgestattet. Dieser kann beispielsweise in axialer Richtung und/oder in Umfangsrichtung Kühlkanäle aufweisen. Außerdem kann der Flüssigkeitskühlmantel 8 ein- oder zweiteilig gebildet sein. Im letzteren Fall weist er beispielsweise einen Innenmantel und einen Außenmantel auf, die ineinander gefügt werden. In der Regel besitzt eine elektrische Maschine jedoch entweder Außenrippen 6 zur Luftkühlung oder den Flüssigkeitskühlmantel 8 zur Flüssigkeitskühlung. Als weitere Kühlelemente sind in der elektrischen Maschine und insbesondere im Stator 1 axiale Kühlkanäle 9 angedeutet.

Stirnseitig ist das Gehäuse 5 an beiden Seiten jeweils durch ein Lagerschild 10 abgeschlossen. Im Zentrum der Lagerschilde befinden sich Lager 11, die insbesondere als Wälzlager ausgeführt sein können. Die Lager 11 lagern eine Welle 12, auf der der Rotor 2 drehfest angeordnet ist. Diese Lagerung des Rotors 2 mittels der Welle 12 in den Lagerschilden 10 bedingt einen präzisen Luftspalt 13 zwischen dem Blechpaket des Stators 1 und dem Blechpaket des Rotors 2. Auf der Welle 12 ist im vorliegenden Beispiel außerdem drehfest ein Lüfter 14 angeordnet.

Wie oben bereits angedeutet wurde, kann die elektrische Maschine auch anders aufgebaut sein und beispielsweise Gehäuse 5 und/oder keinen Lüfter 14 aufweisen. Die in FIG 1 dargestellten Komponenten der elektrischen Maschine stellen lediglich eine Auswahl von möglichen Komponenten dar, die beliebig abgeändert werden kann.

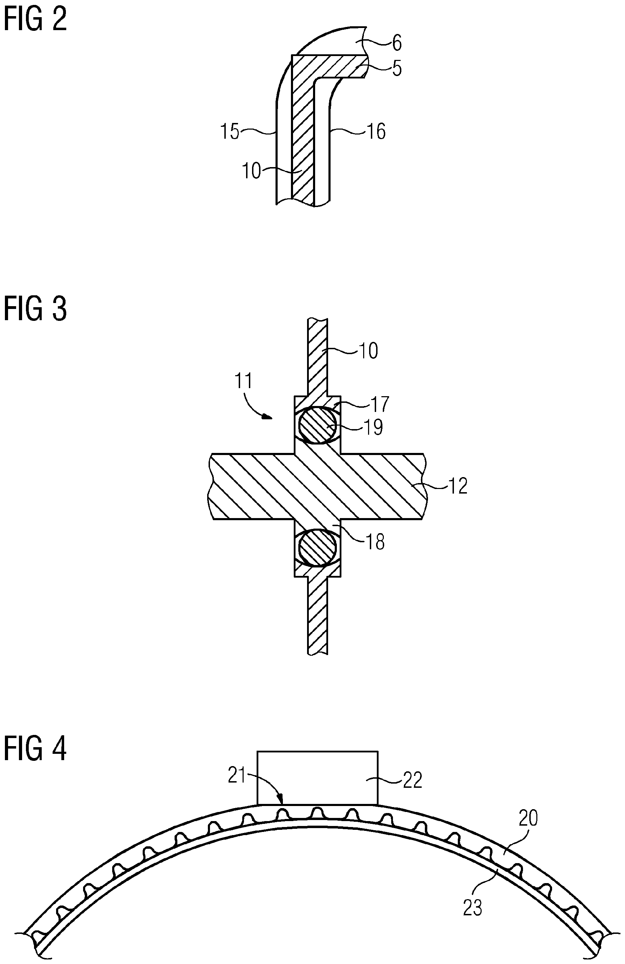

In FIG 1 sind außerdem die Teilansichten II und III markiert, die in jeweiligen Vergrößerungen in FIG 2 bzw. FIG 3 zu erkennen sind.

Eine spezielle funktionelle Einheit stellt entsprechend FIG 2 das Gehäuse 5 mit zumindest einem der Lagerschilde 10 dar. Diese funktionelle Einheit kann gemäß einem Ausführungsbeispiel der vorliegenden Erfindung einteilig mittels eines generativen Fertigungsverfahrens hergestellt sein. Diese Einteiligkeit der Komponenten Gehäuse 5 und Lagerschild 10 ist daran zu erkennen, dass keine Bereichsgrenze zwischen beiden Komponenten verläuft. Nicht nur an dem Abschnitt des Gehäuses 5 kann eine Außenrippe 6 einteilig angeformt sein, sondern es kann auch an dem Abschnitt des Lagerschilds 10 eine Außenrippe 15 angeformt sein, die entsprechend in radialer Richtung verläuft, während die Außenrippe 6 in axialer Richtung verläuft. Optional kann an dem Abschnitt des Lagerschilds 10 der in FIG 2 dargestellten funktionellen Einheit auch eine Innenrippe 16 zur Kühlung im Inneren der elektrischen Maschine ausgebildet sein. Insbesondere können also sämtliche Komponenten 5, 6, 10, 15 und 16 einteilig mit Hilfe eines oder mehrerer generativer Fertigungsverfahren hergestellt sein. Somit ist kein Presssitz oder keine Schraubverbindung zwischen Gehäuse 5 und Lagerschild 10 erforderlich. In einer Ausgestaltung kann vorgesehen sein, dass der Rotor 2 in den Stator 1 bei der Montage eingeschoben wird und ein zweites Lagerschild 10 als separate Komponente das Gehäuse nach der Montage verschließt.

Als weitere funktionelle Einheit kann gemäß FIG 3 ein Lagerteil, z.B. der Außenring 17 des Wälzlagers 11 mit dem Lagerschild 10 einteilig gefertigt sein. Durch diese Integration des Außenrings 17 in dem Lagerschild 10 wird Ersteres dort gehalten und abgestützt.

Ähnlich kann auch die Welle 12 einteilig mit dem Innenring 18 des Lagers 11 gebildet sein. Auch die Wälzkörper 19 des Wälzlagers 11 können mit dem generativen Fertigungsverfahren ausgebildet sein. Somit lässt sich z.B. das gesamte Wälzlager 11 mit seinen Wälzkörpern 19, seinem Innenring 18 und seinem Außenring 17 generativ herstellen. Diese Art der Herstellung des Lagers bzw. der Lager-Funktionseinheiten ist insbesondere für kleinere Motoren denkbar, die wenig Einsatzzeit und geringe Drehzahlen aufweisen wie etwa bei Sitzverstellungen in Fahrzeugen.

Eine weitere Funktionseinheit, die einteilig gebildet werden kann, kann die Welle 12 mit dem Blechpaket des Rotors 2 gegebenenfalls einschließlich des Innenrings 18 als Lagerteil sein. Eine alternative funktionelle Einheit für das einteilige generative Herstellungsverfahren wäre die Welle 12 mit Lüfter 14 und Rotorblechpaket.

Als weitere funktionelle Einheit kann mit dem generativen Fertigungsverfahren das Gehäuse mit dem Statorblechpaket bzw. einem entsprechenden magnetisch leitfähigen Grundkörper gebildet werden. Gegebenenfalls kann einteilig mit dieser Einheit auch ein Wicklungssystem generativ hergestellt werden. Unter Umständen können sogar die beiden Lagerschilde einstückig mit dem Gehäuse verbunden werden. Eventuell kann so ein komplett geschlossener Motor bereitgestellt werden, wobei bei dem generativen Verfahren entweder der Rotor als Ganzes bei halbfertiger Außenschale eingesetzt wird, oder aber er wird ebenfalls bei dem generativen Prozess mitgefertigt. Somit ist insbesondere kein Presssitz zwischen dem Stator und dem Gehäuse erforderlich, was den Herstellungsprozess deutlich vereinfacht.

Ferner kann als einstückige funktionelle Einheit ein Flüssigkeitskühlmantel aus einem Innenmantel und einem Außenmantel generativ hergestellt werden. Im Flüssigkeitskühlmantel können nahezu beliebige auch mäanderförmige und/oder gerade und/oder gebogene Kühlkanäle realisiert werden. Der Innenmantel kann z.B. aus thermisch gut leitendem Material aufgebaut sein, um die Wärme aus dem Stator zu leiten. Demgegenüber kann der Außenmantel aus thermisch wenig oder schlecht leitendem Material gebildet werden, um z.B. eine Schutzschicht zu realisieren, die eine mögliche Verbrennung (Personenschutz) oder eine Wärmeleitung in benachbarte Geräte (wichtig bei Einbaumotoren oder direkt angebauten Umrichtern) vermeidet. Somit ist eine thermisch optimale Gestaltung des Flüssigkeitsmantels möglich.

In einer weiteren Ausgestaltung gemäß FIG 4 kann ein Außenkühlmantel 20 als Kühlmantelteil der elektrischen Maschine in einem Abschnitt 21, auf den direkt ein Umrichter 22 aufgebracht ist, ebenfalls ein gut wärmeleitendes Material aufweisen, um so den Umrichter 22 durch den Kühlmantel zu kühlen und dennoch einen Personenschutz am Motorgehäuse zu gewährleisten. Dabei kann ein Innenmantel 23 als weiteres Kühlmantelteil mit dem Außenmantel 20 einteilig generativ gefertigt sein. Ebenso ist es vorteilhaft, wenn der Umrichter 22 bzw. dessen Gehäuse und insbesondere dessen Abschnitt 21 mit dem gegebenenfalls besonders wärmeleitenden Material einstückig gebildet ist. Wegen der Einstückigkeit der Komponenten des Flüssigkeitskühlmantels kann die Dichtheit problemlos erreicht werden. Es sind dann keine aufwendigen Labyrinthdichtungen und/oder O-Ringe notwendig wie bei gängigen Fügeverfahren. Dies begünstigt einen wesentlich einfacheren Aufbau und einen zuverlässigeren Betrieb, da die Dichtheit und damit die Kühlwirkung nicht überwacht werden muss.

Des Weiteren könnte generativ ein Gehäuse der elektrischen Maschine mit einem Gehäuseanbauteil als funktionelle einstückige Einheit hergestellt werden. Ein derartiges Gehäuseanbauteil könnte ein Klemmenkasten gegebenenfalls mit vorgefertigten Klemmen sein. Weitere Gehäuseanbauteile wären beispielsweise Standfüße, die eine individuelle Einstellbarkeit gemäß Kundenwunsch unabhängig von einem geforderten Aufstellungsort ermöglichen, sowie Außenrippen und Transportösen am Motor oder Transformator. Insbesondere könnte diese funktionelle Einheit wie in dem obigen Beispiel mit einem Statorblechpaket und eventuell einem Wicklungssystem bzw. Lagerschilden ergänzt werden. Damit wären keine separaten Arbeitsgänge zum Anbringen der Anbauteile notwendig.

Grundsätzlich sind selbstverständlich auch Kombinationen der soeben vorgestellten Beispiele von möglichen funktionellen Einheiten für eine elektrische Maschine möglich. Generell wäre jede mögliche Kombination aus mindestens zwei Teilen aus der Gruppe von Gehäuse, Gehäuseanbauteil, Kühlmantelteil, Lagerteil, Lagerschild, magnetisch leitfähiger Grundkörper, elektrischer Leiter, Isolation, Welle, Lüfter und elektrische Anschlussvorrichtung für die einstückige generative Herstellung denkbar.

Eine weitere Variante kann darin bestehen, dass die Welle außer im Bereich der Lager nicht zwangsläufig rund ausgeführt ist. Des Weiteren kann das Lagerschild außen und/oder innen Kühlrippen aufweisen, die die bisher bekannten, z.B. radialen Ausrichtungen bei optimierter Kühlfläche besitzen. Des Weiteren können die Kühlrippen Formgebungen aufweisen, die durch klassische Fertigungsverfahren nur aufwendig herzustellen wären, wie z.B. geschwungene Rippen.

## Patentansprüche

1. Elektrische Maschine mit
- mindestens zwei Komponenten aus der Gruppe von Gehäuse(5), Gehäuseanbauteil (7), Kühlmantelteil (20,23), Lagerteil (17,18,19), Lagerschild (10), magnetisch leitfähiger Grundkörper, elektrischer Leiter (4), Isolation, Welle (12), Lüfter (14) und elektrische Anschlussvorrichtung,
**dadurch gekennzeichnet, dass**
- die mindestens zwei Komponenten einteilig mittels eines oder mehrerer generativer Fertigungsverfahren gefertigt sind.

2. Elektrische Maschine nach Anspruch 1, die als dynamoelektrische Maschine ausgebildet ist.

3. Elektrische Maschine nach Anspruch 1 oder 2, wobei die mindestens zwei Komponenten aus mehreren Materialien gefertigt sind.

4. Elektrische Maschine nach einem der vorhergehenden Ansprüche, wobei die mindestens zwei Komponenten hauptsächlich aufeinander abgestützt sind.

5. Elektrische Maschine nach einem der vorhergehenden Ansprüche, wobei die Komponenten eine elektrisch und magnetisch passive, einteilige Einheit bilden.

6. Elektrische Maschine nach Anspruch 5, wobei die einteilige Einheit das Gehäuse und das Lagerschild aufweist.

7. Elektrische Maschine nach Anspruch 6, wobei die einteilige Einheit das Kühlmantelteil (20,23) und/oder das Lagerteil (17,18,19) und/ oder das Gehäuseanbauteil (7) aufweist.

8. Elektrische Maschine nach einem der Ansprüche 1 bis 4, wobei die Komponenten eine elektrisch und magnetisch aktive, einteilige Einheit bilden.

9. Elektrische Maschine nach Anspruch 8, wobei die aktive einteilige Einheit einen Stator (1) oder Rotor (2) aufweist.

10. Elektrische Maschine nach Anspruch 9, wobei die einteilige Einheit den Stator (1) und mindestens eine Komponente aus der Gruppe von Gehäuse (5), Gehäuseanbauteil (7), Kühlmantelteil (20,23), Lagerteil (17,18,19), Lagerschild (10) und elektrische Anschlussvorrichtung (7) aufweist.

11. Elektrische Maschine nach Anspruch 9, wobei die einteilige Einheit den Rotor (2) sowie die Welle (12) und/oder den Lüfter (14) aufweist.

12. Verfahren zum Herstellen einer elektrischen Maschine durch
- Fertigen von mindestens zwei Komponenten aus der Gruppe von Gehäuse (5), Gehäuseanbauteil (7), Kühlmantelteil (20,23), Lagerteil (17,18,19), Lagerschild (10), magnetisch leitfähiger Grundkörper, elektrischer Leiter (4), Isolation, Welle (12), Lüfter (14) und elektrische Anschlussvorrichtung für die elektrische Maschine,
**dadurch gekennzeichnet, dass**
- die mindestens zwei Komponenten einteilig mittels eines oder mehrerer generativer Fertigungsverfahren gefertigt werden.

13. Verfahren nach Anspruch 12, wobei die gesamte elektrische Maschine mit sämtlichen Komponenten der Gruppe mittels des oder der generativen Fertigungsverfahren in einem einzigen Prozess hergestellt wird.

14. Verfahren nach Anspruch 12 oder 13, wobei das oder die generativen Fertigungsverfahren ein Pulverbettverfahren wie Selektives Lasersintern oder Selektives Laserschmelzen, ein Freiraumverfahren wie Auftragsschweißen oder Metall-Pulver-Auftragsverfahren, ein Flüssigmaterialverfahren wie Stereolithografie oder ein anderes Schichtbauverfahren wie 3D-Siebdruck umfassen.
